# EUROPÄISCHE PATENTSCHRIFT

(11) **EP 2 909 383 B1**
(45) Veröffentlichungstag und Bekanntmachung des Hinweises auf die Patenterteilung: **02.01.2019**
(21) Anmeldenummer: 13774064.3
(22) Anmeldetag: 13.09.2013
(51) Int. Cl.: E03C 1/04, E03C 1/06, F16K 15/18

(54) **SANITÄRE AUSLAUFARMATUR MIT EINER HANDBRAUSE**
SANITARY MIXER WITH SHOWER HEAD
FAUCET AVEC UNE POMME DE DOUCHE

(30) Priorität: 02.10.2012 DE 202012009461 U
(43) Veröffentlichungstag der Anmeldung: 26.08.2015
(73) Patentinhaber: Neoperl GmbH, 79379 Müllheim (DE)
(72) Erfinder: HAUTH, Matthias, 79674 Todtnau / Muggenbrunn (DE)
(74) Vertreter: Börjes-Pestalozza, Henrich
(86) Internationale Anmeldenummer: PCT/EP2013/002752
(87) Internationale Veröffentlichungsnummer: WO 2014/053213

(56) Entgegenhaltungen:
- CA-A1- 2 725 733
- CN-U- 201 603 636
- FR-A- 1 254 111

## Beschreibung

Die Erfindung betrifft eine sanitäre Auslaufarmatur mit einer Handbrause, die ein Brause- oder Entnahmeventil hat und über eine flexible Schlauchleitung mit einem Armaturenkorpus verbunden ist, der eine Handbrause-Aufnahme hat, in welcher Handbrause-Aufnahme die Handbrause in einer Bereitschaftsstellung einsetzbar und ablegbar ist.
Die Erfindung befaßt sich auch mit einem Absperrventil, das ein Ventilgehäuse hat, in dem ein Ventilkörper zwischen einer Offenstellung und einer Schließstellung bewegbar geführt ist.

Man kennt bereits Auslaufarmaturen der eingangs erwähnten Art, die als Ersatz für ein Bidet im Bereich einer Toilette angeordnet und verwendet werden. Die vorbekannten Auslaufarmaturen weisen eine Handbrause auf, die über eine flexible Schlauchleitung mit einem Armaturenkorpus verbunden ist. In die Handbrause ist ein manuell betätigbares Brause- oder Entnahmeventil integriert, das zur Wasserentnahme öffenbar und anschließend wieder schließbar ist. Der Armaturenkorpus, der meist neben einer Toilettenschüssel an der Wand befestigt ist, weist eine gabelförmige Handbrause-Aufnahme auf, durch deren Gabelöffnung die flexible Schlauchleitung derart eingefädelt werden kann, dass anschließend die Handbrause in einer Bereitschaftsstellung in die Handbrause-Aufnahme eingesetzt und bis zum nächsten Einsatz abgelegt werden kann.

Bei solchen Handbrausen, die über eine flexible Schlauchleitung mit dem Wasserzulauf verbunden sind, besteht jedoch die Gefahr, dass die Handbrause in Schmutzwasser eingetaucht wird und dass anschließend bei entsprechenden Druckverhältnissen solches Schmutzwasser über die Handbrause und die flexible Schlauchleitung in das Trinkwasserversorgungsnetz gelangt. Um dieser Gefahr zu begegnen, ist es bereits bekannt, solchen Handbrausen zuströmseitig eine Rücklaufsperre vorzuschalten, die ein Ansaugen von Schmutzwasser über die Handbrause entgegen der üblichen Durchströmrichtung verhindert und die beispielsweise als Rückschlagventil ausgestaltet sein kann.

Selbst bei derart verbesserten Ausführungen besteht die Gefahr, dass es zu Undichtigkeiten insbesondere im Bereich der bruchgefährdeten flexiblen Schlauchleitung kommen und das zuströmende Wasser anschließend ungehindert ausströmen kann, insbesondere wenn ein in die Auslaufarmatur integriertes Zulaufventil nicht geschlossen wird.

Aus der CN 201 603 636 U kennt man bereits eine sanitäre Auslaufarmatur, die zwei wahlweise vorwählbare Wasserausgänge hat, von denen der eine Wasserausgang ein wandseitiger Duschkopf und der andere Wasserausgang eine Handbrause ist, die über eine flexible Schlauchleitung mit dem Armaturenkorpus der vorbekannten Auslaufarmatur verbunden ist. Am Armaturenkorpus ist eine Handbrause-Aufnahme vorgesehen, in welcher Handbrause-Aufnahme die Handbrause in einer Bereitschaftsstellung einsetzbar und ablegbar ist. In einem zur Schlauchleitung führenden Leitungsabschnitt im Armaturenkorpus ist ein Umstellventil zwischengeschaltet, das als Zwei-Wege-Ventil ausgebildet ist und entweder den zum Duschkopf führenden Flüssigkeitsweg freigibt, während der zur Schlauchleitung der Handbrause führende Flüssigkeitsweg verschlossen ist, oder aber das den zur Schlauchleitung führenden Flüssigkeitsweg öffnet, während demgegenüber der zum Duschkopf führende Flüssigkeitsweg verschlossen ist. Dazu ist ein Stellschieber im Armaturenkorpus zwischen zwei Stellpositionen verschiebbar, von denen die eine Stellposition dem einen Flüssigkeitsweg und die andere Stellposition dem anderen Flüssigkeitsweg zugeordnet ist. Der Stellschieber steht mit einem freien Stellschieber-Endbereich derart in die Handbrause-Aufnahme vor, dass die in der Bereitschaftsstellung in die Handbrause-Aufnahme eingesetzte und dort abgelegte Handbrause den freien Stellschieber-Endbereich beaufschlagt und den Stellschieber in der dem Duschkopf zugeordneten Stellposition sichert, in welcher der Flüssigkeitsweg zur Handbrause und zu ihrer Schlauchleitung verschlossen ist.

Aus der FR 1 254 111 A kennt man bereits eine sanitäre Auslaufarmatur, die ebenfalls zwei wahlweise vorwählbare Wasserausgänge hat, von denen der eine Wasserausgang beispielsweise ein Badewannenauslass und der andere Wasserausgang eine Handbrause ist, die über eine flexible Schlauchleitung mit der Auslaufarmatur verbunden ist. In den Armaturenkorpus der vorbekannten Auslaufarmatur ist ein Umstellventil integriert, das als Zwei-Wege-Ventil ausgebildet ist und entweder den einen oder den anderen Flüssigkeitsweg freigibt. Das Umstellventil der aus FR 1 254 111 A vorbekannten Auslaufarmatur hat dazu einen Stellschieber, der über einen Schwenkhebel verschiebbar ist und der in seinen beiden Stellpositionen den einen Flüssigkeitsweg öffnet, während der Stellschieber gleichzeitig den jeweils anderen Stellweg verschließt. An der vorbekannten Auslaufarmatur ist eine Handbrause-Aufnahme vorgesehen, in die der Schwenkhebel mit seinem einen Hebelende vorsteht. Durch Einsetzen der vorläufig nicht benötigten Handbrause in die Handbrause-Aufnahme wird der Schwenkhebel gegen die Rückstellkraft einer Rückstellfeder und das Eigengewicht des Stellschiebers von der einen Stellposition in die andere Stellposition bewegt, in welcher der zur Handbrause führende Flüssigkeitsweg verschlossen ist, während der zum Badewannenauslass führende Flüssigkeitsweg geöffnet wird.

Eine vergleichbare sanitäre Auslaufarmatur mit zwei Wasserausgängen, von denen der eine Wasserausgang ein Badewannenauslass ist, während der andere Wasserausgang über eine flexible Schlauchleitung zu einer Handbrause führt, sowie mit einem in den Armaturenkorpus integrierten Umstellventil, über das die Wasserausgänge wahlweise ansteuerbar sind, ist auch aus der CA 2 725 733 A vorbekannt.

Die aus den vorgenannten Druckschriften vorbekannten Auslaufarmaturen weisen jeweils nur ein Umstellventil auf, über das wahlweise einer der zwei verschiedenen Flüssigkeitswege angesteuert werden kann. Keines der in den vorbekannten Auslaufarmaturen vorgesehenen Umstellventile vermag das unkontrollierte Ausströmen von Wasser im Falle einer geborstenen Schlauchleitung zu verhindern, selbst wenn die endseitig an der Schlauchleitung vorgesehene Handbrause in der Handbrause-Aufnahme abgelegt ist, - vielmehr strömt das Wasser allenfalls nicht über die Bruchstelle in der Schlauchleitung, sondern über den anderen Wasserausgang dieser Auslaufarmaturen aus. Es besteht daher insbesondere die Aufgabe, eine sanitäre Auslaufarmatur der eingangs erwähnten Art zu schaffen, die eine höchstmögliche Betriebssicherheit bietet und bei der insbesondere durch Undichtigkeiten im Bereich der Schlauchleitung verursachte Schäden wirkungsvoll unterbunden werden.

Die erfindungsgemäße Lösung dieser Aufgabe besteht bei der Auslaufarmatur der eingangs erwähnten Art insbesondere in den Merkmalen des geltenden Patentanspruchs 1.

Die erfindungsgemäße Auslaufarmatur weist in ihrem Armaturenkorpus zumindest ein Absperrventil auf, das in einem zur Schlauchleitung führenden Leitungsabschnitt zwischengeschaltet ist. Das erfindungsgemäß vorgesehene, zumindest eine Absperrventil hat einen Ventilkörper, der zwischen einer Offenstellung und einer Schließstellung beweglich geführt ist. Das zumindest eine Absperrventil ist derart in einen zur Schlauchleitung führenden Leitungsabschnitt zwischengeschaltet, dass der Ventilkörper den Wasserzulauf zur Schlauchleitung absperrt und eine Undichtigkeit im Bereich der Schlauchleitung nicht zu unkontrollierten größeren Wasserschäden führen kann. Im Armaturenkorpus der erfindungsgemäßen Auslaufarmatur ist auch ein Sperrschieber vorgesehen, der zwischen einer Entriegelungsstellung und einer Verriegelungsstellung verschiebbar ist. Dieser Sperrschieber steht mit einem freien Sperrschieber-Endbereich derart in die Handbrause-Aufnahme vor, dass die in der Bereitschaftsstellung in die Handbrause-Aufnahme eingesetzte und abgelegte Handbrause den freien Sperrschieber-Endbereich beaufschlagt und den Sperrschieber in seiner Verrieglungsstellung sichert. In dieser Verriegelungsstellung sperrt der Sperrschieber den Stellweg des Ventilkörpers und sichert diesen in der Schließstellung, so dass eine unkontrollierte Wasserzufuhr unterbunden ist. Erst nach der Entnahme der Handbrause aus der Handbrause-Aufnahme des Armaturenkorpus kann sich der Sperrschieber wieder in seine Entriegelungsstellung bewegen, so dass auch der Ventilkörper des zumindest einen Absperrventils sich in die Offenstellung bewegen kann und die Wasserzufuhr freigibt. Die erfindungsgemäße Auslaufarmatur zeichnet sich daher durch eine hohe Betriebssicherheit im Hinblick auf eventuelle Undichtigkeiten im Bereich der zur Handbrause führenden Schlauchleitung aus.

Um die Betriebssicherheit der erfindungsgemäßen Auslaufarmatur noch zusätzlich zu erhöhen, ist erfindungsgemäß vorgesehen, dass am Sperrschieber zumindest zwei, vom zuströmenden Wasser beaufschlagbare und in entgegengesetzte Richtungen orientierte Teilflächen vorgesehen sind, von denen die dem Schieber-Endbereich zugewandte Teilfläche(n) im Vergleich zu der/den dem Schieber-Endbereich abgewandte(n) Teilfläche(n) größer ist. Der Sperrschieber wird durch die hydraulischen Kräfte des zuströmenden Wassers zwischen einer Entriegelungsstellung und einer Verriegelungsstellung bewegt. Die Erfindung zeichnet sich daher durch eine vergleichsweise geringe, beim Einlegen der Handbrause in die Handbrause-Aufnahme ausgelöste Initialkraft und letztlich durch eine hohe Betriebssicherheit aus. Diese hydraulisch unterstützte Ausführung bietet den Vorteil, dass sie in einem breiten Druckbereich eingesetzt werden kann, da die Rückstellung und das Schließen des Sperrschiebers über, zum Versorgungs- oder Wasserdruck proportionale hydraulische Kräfte erfolgt, was demgegenüber bei einer Ausführung nicht gegeben ist, bei der lediglich eine feder- oder gummielastische Rückstellkraft auf den Sperrschieber einwirkt. Bei einer Ausführung, bei der lediglich eine feder- oder gummielastische Rückstellkraft auf den Sperrschieber einwirkt, hängen die Schließkräfte ausschließlich von der Federkraft ab und können nur in einem eng eingeschränkten Druckbereich, für den das verwendete Rückstellelement ausgelegt ist, eine ordnungsgemäße Funktion gewährleisten.

Dabei sieht eine Ausführungsform gemäß der Erfindung vor, dass zumindest ein Absperrventil als Rückschlagventil ausgebildet ist. Da ein Rückschlagventil in seiner Schließstellung den Wasserdurchfluss sperrt, ist auch ein Rückschlagventil als Absperrventil verwendbar, wenn dessen Ventilkörper in der Bereitschaftsstellung der Handbrause in dieser Schließstellung gesichert werden kann.

Um den Stellweg des Ventilkörpers eines Absperrventils auf möglichst einfache Weise beeinflussen zu können, ist es vorteilhaft, wenn am Ventilkörper des Absperrventils ein vorzugsweise zentraler Führungszapfen vorgesehen ist, der in einem Ventilgehäuse des Absperrventils verschieblich geführt ist.

Dabei sieht eine bevorzugte Ausführungsform gemäß der Erfindung vor, dass der Führungszapfen abströmseitig derart über das Ventilgehäuse vorsteht, dass der Schiebeweg des mit dem Führungszapfen verbundenen Ventilkörpers mittels dem Sperrschieber sperrbar ist.

Zusätzlich zu den oder auch statt der oben beschriebenen Ausführungen des Erfindungsgegenstandes kann das erfindungsgemäß verwendete Absperrventil auch einen Ventilkörper haben, der mit dem Sperrschieber verbunden ist, wobei der Ventilkörper in der Verriegelungsstellung des Sperrschiebers an einem Ventilsitz des Absperrventils dichtend anliegt. Bei dieser Ausführungsform ist der Ventilkörper des Absperrventils mit dem Sperrschieber verbunden, so dass mit Hilfe des Sperrschiebers ohne weiteres auch der Stellweg des Ventilkörpers veränderbar und dieser in seiner Schließstellung blockierbar ist.

Die kostengünstige Herstellung und die einfache Montage der erfindungsgemäßen Auslaufarmatur wird begünstigt, wenn das zumindest eine Absperrventil in einer vorzugsweise zylindrischen Einsetzkartusche gehalten ist, die in den Armaturenkorpus einsetzbar ist und wenn der freie Schieber-Endbereich des Sperrschiebers stirnseitig über die Einsetzkartusche vorsteht.

Möglich ist, dass an der Handbrause ein Zapfen vorsteht, mit dem die Handbrause in die Handbrause-Aufnahme einsetzbar ist. Eine bevorzugte Ausführungsform gemäß der Erfindung sieht jedoch vor, dass die Handbrause-Aufnahme gabelförmig ausgebildet ist, derart, dass sich die flexible Schlauchleitung durch die Gabelöffnung der Handbrause-Aufnahme hindurchfädeln lässt, um anschließend die an dem einen Endbereich der Schlauchleitung vorgesehene Handbrause als solche in die Handbrause-Aufnahme einsetzen zu können.

Eine besonders einfache Ausführungsform gemäß der Erfindung sieht vor, dass der Sperrschieber von der Verriegelungsstellung gegen eine Rückstellkraft in die Entriegelungsstellung verschiebbar ist. Dabei kann als Rückstellkraft zumindest ein gummielastisches oder federelastisches Rückstellelement vorgesehen sein. Als federelastisches Rückstellelement kann beispielsweise eine Druckfeder dienen.

Bei der oben beschriebenen weiterbildenden Ausführungsform wird der Sperrschieber durch die hydraulischen Kräfte des zuströmenden Wassers zwischen der Entriegelungsstellung und der Verriegelungsstellung bewegt. Dabei ist es zweckmäßig, wenn durch Öffnen des Brause- oder Entnahmeventils der Sperrschieber sich in seine Entriegelungsstellung bewegt und wenn durch Schließen des in die Handbrause integrierten Brause- oder Entnahmeventils der Sperrschieber sich in seine Verriegelungsstellung bewegt. Somit wird sichergestellt, dass allein durch Betätigen des in die Handbrause integrierten Brause- oder Entnahmeventils auch der in die Handbrause-Aufnahme vorstehende Sperrschieber zwischen seiner Verriegelungs- und seiner Entriegelungsstellung bewegbar ist. Da dieser Sperrschieber sich bei geschlossenem Brause- oder Entnahmeventil bereits in seiner Verriegelungsstellung befindet, in welcher sich der Sperrschieber aus der Handbrause-Aufnahme zumindest weitestgehend zurückgezogen hat, wird das Einsetzen und Ablegen der Handbrause in die Handbrause-Aufnahme nicht weiter behindert. Ist die Handbrause in die Handbrause-Aufnahme eingesetzt, wird der Sperrschieber sicher in seiner Verriegelungsstellung gehalten.

Zweckmäßig ist es, wenn der Sperrschieber bei geschlossenem Brause- oder Entnahmeventil in seiner Verriegelungsstellung verharrt, in welcher Verriegelungsstellung der Sperrschieber das Einsetzen und Ablegen der Handbrause in die Handbrause-Aufnahme nicht behindert und dazu vorzugsweise aus der Handbrause-Aufnahme zumindest weitgehend zurückgezogen ist.

Um die kompakte Ausgestaltung nicht zu beeinträchtigen, kann die dem Schieber-Endbereich zugewandte Ringfläche des Ringflansches vom zuströmenden Wasser beaufschlagbar sein.

Damit das zuströmende Wasser auf die dem Schieber-Endbereich zugewandte Ringfläche des Ringflansches einwirken kann, ist es zweckmäßig, wenn der zwischen dem Ringflansch und der benachbarten Stirninnenseite der Einsetzkartusche vorgesehene Kartuschen-Innenraum an den Benutzungs- oder Kontaktflächen zwischen der Einsetzkartusche und dem Sperrschieber abgedichtet ist.

Damit das zuströmende Wasser die dem Schieber-Endbereich zugewandte Ringfläche des im Kartuscheninnenraum der Einsetzkartusche geführten Ringflansches beaufschlagen kann, ist es vorteilhaft, wenn der Kartuscheninnenraum und die vom zuströmenden Wasser umspülte Außenseite der Einsetzkartusche über zumindest einen Verbindungskanal verbunden ist.

Vorteilhaft ist es, wenn die dem Schieber-Endbereich abgewandte Stirnfläche des Sperrschiebers von dem zuströmenden Wasser beaufschlagbar ist. Diese dem Schieber-Endbereich abgewandte Stirnfläche kann kleiner ausgeführt werden, als die dem Schieber-Endbereich zugewandte Ringfläche am Ringflansch des Sperrschiebers.

Um die auf den Sperrschieber einwirkenden hydraulischen Kräfte nicht zu behindern, ist es vorteilhaft, wenn der zwischen der Stirnfläche des Sperrschiebers und dessen Ringfläche vorgesehene Kartuschen-Innenraum über zumindest einen Belüftungskanal mit der Atmosphäre verbunden ist. Dabei sieht eine bevorzugte Ausführungsform gemäß der Erfindung vor, dass der zumindest eine Belüftungskanal im Sperrschieber vorgesehen ist, und dass der Belüftungskanal im Schieberendbereich seine der Atmosphäre zugewandte Kanalöffnung hat.

Bei dem Absperrventil der eingangs erwähnten Art besteht die erfindungsgemäße Lösung darin, dass in der Einsetzkartusche ein Sperrschieber zwischen einer Entriegelungsstellung und einer Verriegelungsstellung verschiebbar ist, in welcher Verriegelungsstellung der Sperrschieber den Stellweg des Ventilkörpers aus der Schließstellung sperrt, dass der Sperrschieber mit einem freien Sperrschieber-Endbereich stirnseitig über die Einsetzkartusche vorsteht, und dass am Sperrschieber zumindest zwei, vom zuströmenden Wasser beaufschlagbare und in entgegengesetzte Richtungen orientierte Teilflächen vorgesehen sind, von denen die dem Schieber-Endbereich zugewandte(n) Teilfläche(n) im Vergleich zu der/den dem Schieber-Endbereich abgewandte(n) Teilfläche(n) größer ist.

Dabei sieht auch bei dem erfindungsgemäßen Absperrventil eine bevorzugte Ausführungsform gemäß der Erfindung vor, dass am Sperrschieber zumindest zwei, vom zuströmenden Wasser beaufschlagbare und in entgegengesetzte Richtungen orientierte Teilflächen vorgesehen sind, von denen die dem Schieber-Endbereich zugewandte Teilfläche(n) im Vergleich zu der/den dem Schieber-Endbereich abgewandte(n) Teilfläche(n) größer ist.

Weiterbildungen gemäß der Erfindung ergeben sich aus der nachfolgenden Beschreibung in Verbindung mit den Ansprüchen sowie der Zeichnung. Nachstehend wird die Erfindung anhand eines bevorzugten Ausführungsbeispieles noch näher beschrieben.

Es zeigt:
- Fig. 1: eine, in einem Teil-Längsschnitt dargestellt sanitäre Auslaufarmatur, die über eine flexible Schlauchleitung mit einer auslaufseitig vorgesehenen Handbrause verbunden ist, wobei die Auslaufarmatur hier in einer Bereitschaftsstellung der Handbrause dargestellt ist, in der die Handbrause in einer Handbrause-Aufnahme an einem wandseitig montierbaren Armaturenkorpus der Auslaufarmatur eingesetzt und abgelegt ist,
- Fig. 2: die ebenfalls im Bereich ihres Armaturenkorpus längs geschnittene Auslaufarmatur aus Fig.1 in einer Gebrauchsstellung, in welcher Gebrauchsstellung die Handbrause aus der Handbrause-Aufnahme entnommen und frei bewegbar ist,
- Fig. 3: den Armaturenkorpus der in den Figuren 1 und 2 gezeigten Auslaufarmatur in einem Längsschnitt, wobei im Armaturenkorpus in einem zur Schlauchleitung führenden Leitungsabschnitt zumindest ein Absperrventil zwischengeschaltet ist, dessen Ventilkörper zwischen einer Offenstellung und einer die Wasserzufuhr unterbindenden Schließstellung bewegbar ist, wobei die Auslaufarmatur hier in der Offenstellung des Absperrventiles gezeigt ist,
- Fig. 4: den bereits in Fig.3 längsgeschnitten dargestellten Armaturenkorpus, wobei sich das im Armaturenkorpus vorgesehene Absperrventil hier in seiner Schließstellung befindet,
- Fig. 5: eine hier längsgeschnitten dargestellte, in den Armaturenkorpus gemäß den Figuren 1 bis 4 einsetzbare Einsetzkartusche, in der sich das Absperrventil der Auslaufarmatur gemäß den Figuren 1 und 2 befindet, wobei das Absperrventil hier in seiner Offenstellung dargestellt ist,
- Fig. 6: die Einsetzkartusche aus Fig.5 in der Offenstellung ihres Absperrventils in einem Teil-Längsschnitt,
- Fig. 7: die Einsetzkartusche aus den Figuren 5 und 6 in der Schließstellung des in der Einsetzkartusche vorgesehenen Absperrventils,
- Fig. 8: die Einsetzkartusche mit dem darin befindlichen Absperrventil in einer auseinandergezogenen Seitenansicht,
- Fig. 9: den Armaturenkorpus der in den Figuren 1 und 2 gezeigten Auslaufarmatur in einer längsgeschnittenen Explosivdarstellung seiner Bestandteile,
- Fig. 10: eine in einem Längsschnitt dargestellte und in einen Armaturenkorpus einsetzbare Einsetzkartusche, in der sich ein Absperrventil befindet, das hier in seiner Offenstellung gezeigt ist,
- Fig. 11: die Einsetzkartusche aus Figur 10 in der Offenstellung ihres Absperrventils in einem Teil-Längsschnitt,
- Fig. 12: die Einsetzkartusche aus den Figuren 10 und 11 in der Schließstellung des Absperrventiles,
- Fig. 13: die Einsetzkartusche aus den Figuren 10 bis 12 in einer teilweise aufgeschnitten gezeigten Perspektivdarstellung,
- Fig. 14: eine Detaildarstellung der Einsetzkartusche im Bereich eines in der Kartuschen-Umfangswandung vorgesehenen Verbindungskanals, wobei der in Figur 14 gezeigte Teilbereich in Figur 13 angedeutet wird, und
- Fig. 15: die Einsetzkartusche aus Figur 10 bis 14 in einer auseinandergezogenen Perspektivdarstellung.

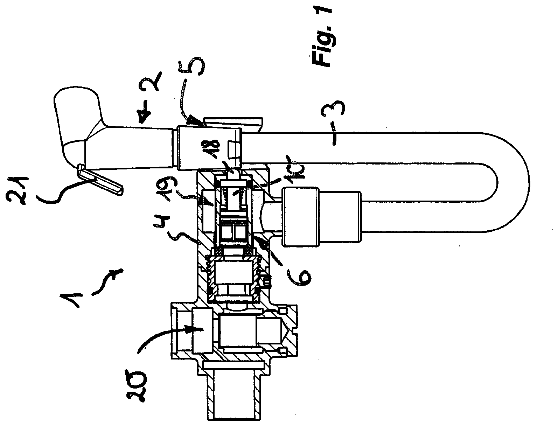

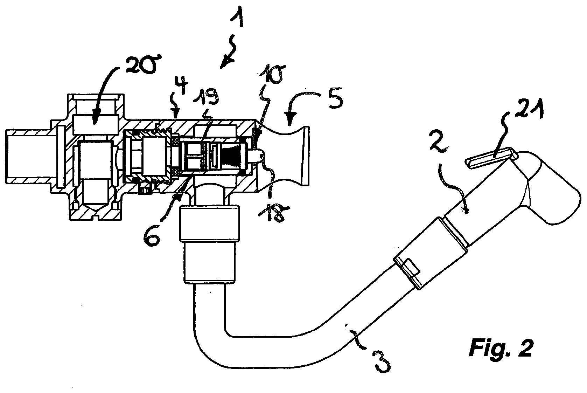

In den Figuren 1 und 2 ist eine sanitäre Auslaufarmatur 1 mit einer auslaufseitigen Handbrause 2 dargestellt, die beispielsweise als Ersatz für ein Bidet im Bereich einer Toilettenschüssel vorgesehen sein kann. Die Handbrause 2 der Auslaufarmatur 1 ist über eine flexible Schlauchleitung 3 mit einem Armaturenkorpus 4 verbunden, der beispielsweise an der Wand montiert sein kann. Der Armaturenkorpus 4 hat eine Handbrause-Aufnahme 5, in welche die Handbrause 2 in der in Figur 1 gezeigten Bereitschaftsstellung einsetzbar und ablegbar ist. In der Bereitschaftsstellung, in der die Handbrause 2 demgegenüber aus der Handbrause-Aufnahme 5 entnommen ist, ist auch die Handbrause 2 frei bewegbar.

Wie in den Figuren 1 und 2 erkennbar ist, ist im Armaturenkorpus 4 zuströmseitig vor der Handbrause 2 ein manuell betätigbares und hier nur angedeutetes Zulaufventil 20 vorgesehen. Durch Schließen des Zulaufventiles 20 kann der Wasserzulauf zur Handbrause 2 gesperrt und die flexible Schlauchleitung 3 vom Wasserdruck im Versorgungsnetz getrennt werden. Des weiteren ist in die Handbrause 2 selbst ein Brauseventil integriert, das zum Auslösen eines Brausestrahles an einem schwenkbar gelagerten Betätigungshebel 21 bestätigbar ist.

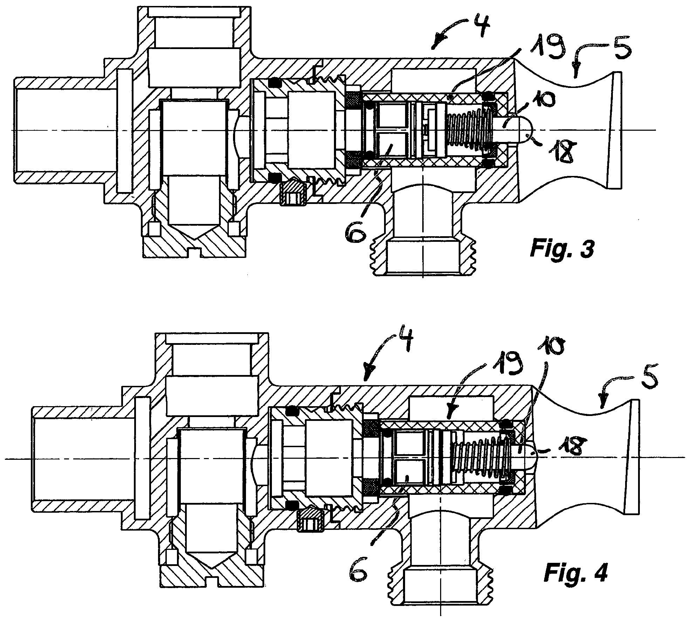

Die hier dargestellte Auslaufarmatur weist darüber hinaus zumindest ein Absperrventil 6 auf, das im Armaturenkorpus 4 in einen zur Schlauchleitung 3 führenden Leitungsabschnitt zwischengeschaltet ist. Der das zumindest eine Absperrventil 6 aufnehmende Leitungsabschnitt ist im Armaturenkorpus 4 abströmseitig nach dem Zulaufventil 20 und zuströmseitig vor der flexiblen Schlauchleitung 3 vorgesehen. Das Absperrventil 6 weist einen Ventilkörper 8 auf, der zwischen einer in Figur 2, 3, 5 und 6 bzw. Figur 10, 11 und 13 gezeigten Offenstellung und einer in Figur 1, 4 und 7 bzw. Figur 12 dargestellten Schließstellung bewegbar ist. In der Schließstellung des Absperrventils 6 sperrt der Ventilkörper 8 den Wasserzulauf zur Schlauchleitung 3 dicht ab.

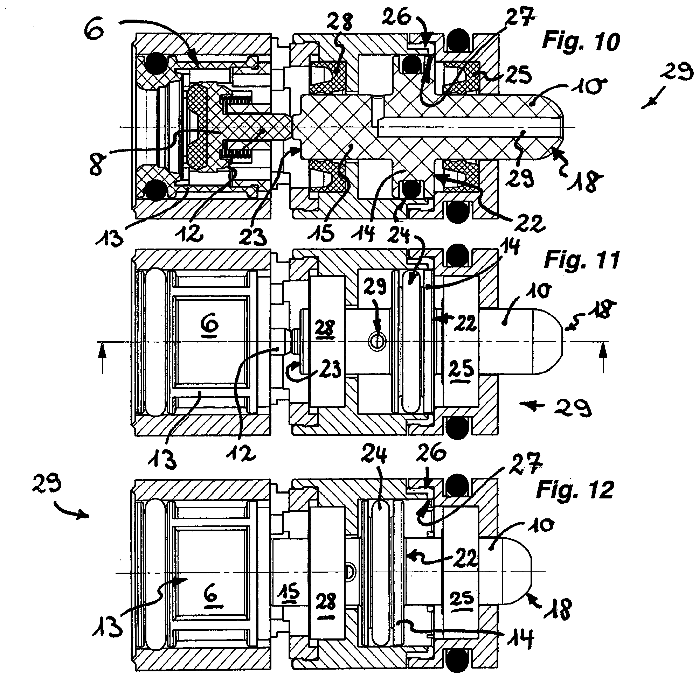

Aus einem Vergleich der Figuren 1 bis 7 und der Figuren 10 bis 13 wird deutlich, dass im Armaturenkorpus 4 ein Sperrschieber 10 vorgesehen ist. Dieser Sperrschieber 10 ist zwischen der in den Figuren 2, 3, 5 und 6 beziehungsweise den Figuren 10, 11 und 13 gezeigten Entriegelungsstellung und einer Verriegelungsstellung verschiebbar, wie sie in den Figuren 1, 4 und 7 bzw. in Figur 12 erkennbar ist.

Das Absperrventil 6 ist hier als Rückschlagventil ausgebildet. Am Ventilkörper 8 dieses Absperrventils 6 ist ein zentraler Führungszapfen 12 vorgesehen, der in dem hier als Patronengehäuse ausgestalteten Ventilgehäuse 13 verschieblich geführt ist. Der Führungszapfen 12 steht auf der Abströmseite des Ventilgehäuses 13 derart über das Ventilgehäuse 13 vor, dass der Schiebeweg des mit dem Führungszapfen 12 verbundenen Ventilkörpers 8 mittels dem Sperrschieber 10 sperrbar ist.

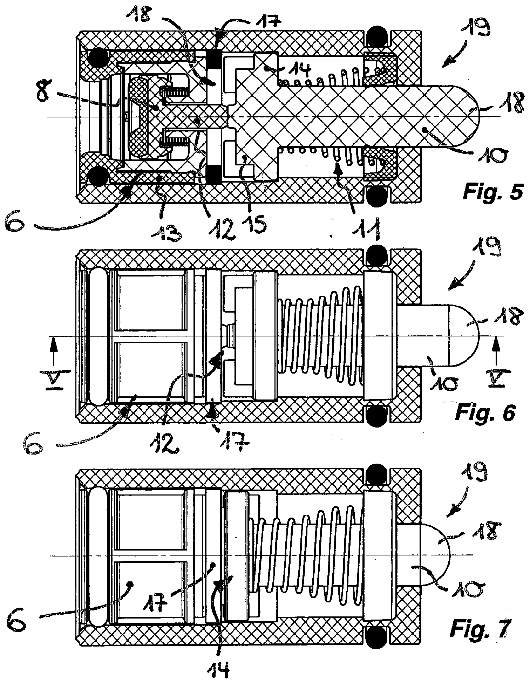

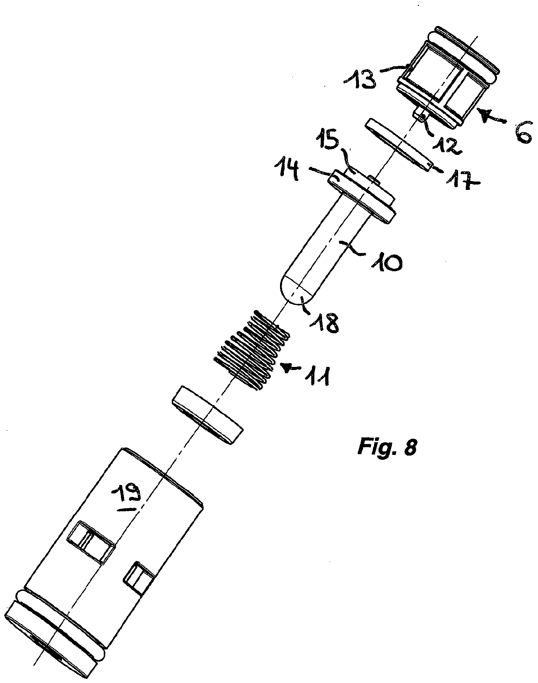

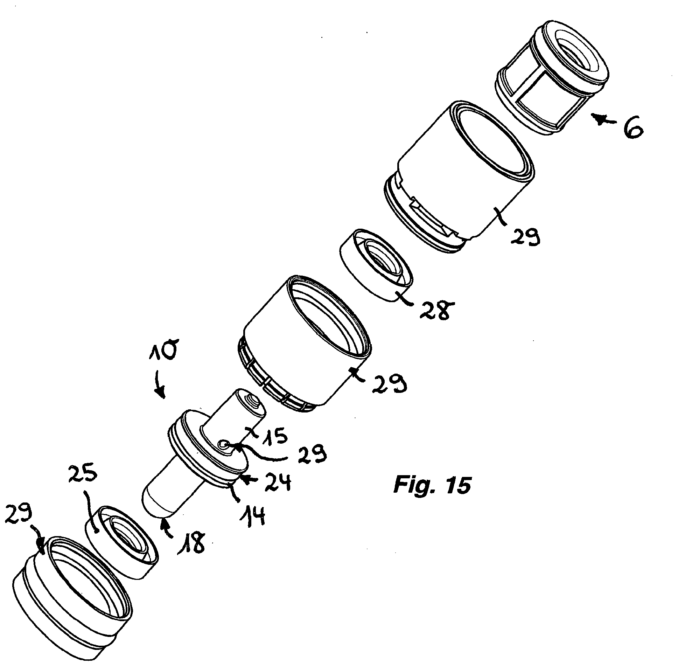

Aus einem Vergleich der Figuren 5 bis 8 sowie der Figuren 10 bis 13 und 15 wird deutlich, dass das Absperrventil 6 und der zugeordnete Sperrschieber 10 in einer hier zylindrisch ausgebildeten Einsetzkartusche 19 gehalten sind, die in den Armaturenkorpus 4 einsetzbar ist. Der Sperrschieber 10 hat einen Führungsabschnitt 9, mit dem der Sperrschieber in der Einsetzkartusche 19 verschieblich geführt ist. In den Figuren 5 und 10 ist deutlich erkennbar, dass der Führungsabschnitt 9 des Sperrschiebers 10 einen als Ringflansch 14 ausgebildeten Teilbereich hat, an dem stirnseitig ein durchmesserreduzierter Teilbereich 15 angeformt ist.

In Figur 5 und 10 ist angedeutet, dass der Sperrschieber 10 den Führungszapfen 12 des als Rückschlagventil ausgestalteten Absperrventils 6 mit dem an den Sperrschieber 10 angeformten Teilbereich 15 beaufschlagt. Dabei steht der freie Schieber-Endbereich 18 des Sperrschiebers 10, der in der Bereitschaftsstellung von der Handbrause 2 beaufschlagt wird, stirnseitig über die Einsetzkartusche 19 vor. Der Sperrschieber 10 steht mit dem freien Sperrschieber-Endbereich 18 derart in die Handbrause-Aufnahme 4 vor, dass die in der Bereitschaftsstellung in die Handbrause-Aufnahme 4 eingesetzte und abgelegte Handbrause 2 den freien Schieber-Endbereich 18 beaufschlagt und den Sperrschieber 10 in seiner Verriegelungsstellung sichert. In dieser Verriegelungsstellung sperrt der Sperrschieber 10 den Stellweg des dem Absperrventil 6 zugeordneten Ventilkörpers 8 und sichert damit diesen Ventilkörper 8 in seiner Schließstellung, so dass eine unkontrollierte Wasserzufuhr zur Schlauchleitung 3 selbst dann unterbunden ist, wenn das im Armaturenkorpus vorgesehene Zulaufventil 20 nicht geschlossen wurde. Erst nach der in Figur 2 gezeigten Entnahme der Handbrause 2 aus der Handbrause-Aufnahme des Armaturenkorpus 4 kann sich der Sperrschieber 10 in seine Entriegelungsstellung bewegen. In der Entriegelungsstellung kann sich der Ventilkörper 8 des Absperrventils 6 in seine Offenstellung bewegen und die Wasserzufuhr zu der zur Handbrause 2 führenden Schlauchleitung 3 wird freigegeben.

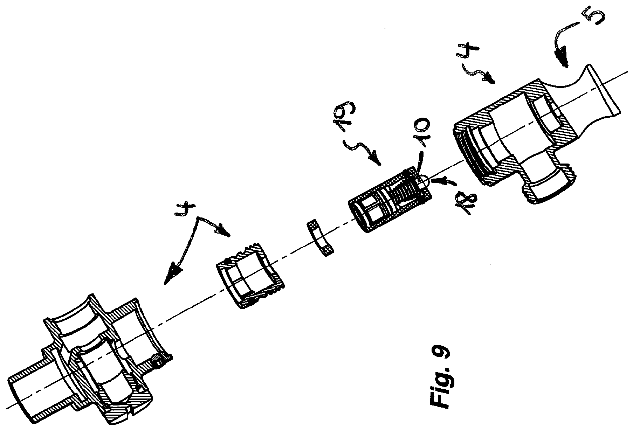

Die in den Figuren 1 bis 9 einerseits und den Figuren 10 bis 15 andererseits gezeigten Ausführungen weisen im wesentlichen denselben Aufbau auf.

Bei der in Figur 1 bis 9 gezeigten Ausführung ist der Sperrschieber 10 anlässlich einer Wasserentnahme von einer Verriegelungsstellung gegen eine Rückstellkraft in eine Entriegelungsstellung verschiebbar. Dabei wird die Rückstellkraft durch zumindest ein gummielastisches oder federelastisches Rückstellelement aufgebracht, das auf den Sperrschieber 10 einwirkt. Dieses Rückstellelement ist bei dem in Figur 1 bis 9 gezeigten Ausführungsbeispiel als Rückstell- oder Wendelfeder 11 ausgestaltet.

Die Figuren 10 bis 15 zeigen demgegenüber ein Ausführungsbeispiel, bei dem der Sperrschieber 10 beim abströmseitigen Absperren des Wasserdurchflusses zum Beispiel durch das Betätigungselement 21 hydraulisch unterstützt von der Entriegelungsstellung in die Verriegelungsstellung bewegt wird. Dazu sind am Sperrschieber 10 zwei, entgegengesetzten Richtungen zugewandte Teilflächen 22, 23 vorgesehen. Damit auf den Sperrschieber 10 eine, den Sperrschieber 10 zwischen der Verriegelungsstellung und der Entriegelungsstellung bewegende hydraulische Kraft einwirkt, ist die dem Schieber-Endbereich 18 zugewandte Teilfläche 22 im Vergleich zu der dem Schieber-Endbereich 18 abgewandten Teilfläche 23 größer ausgestaltet.

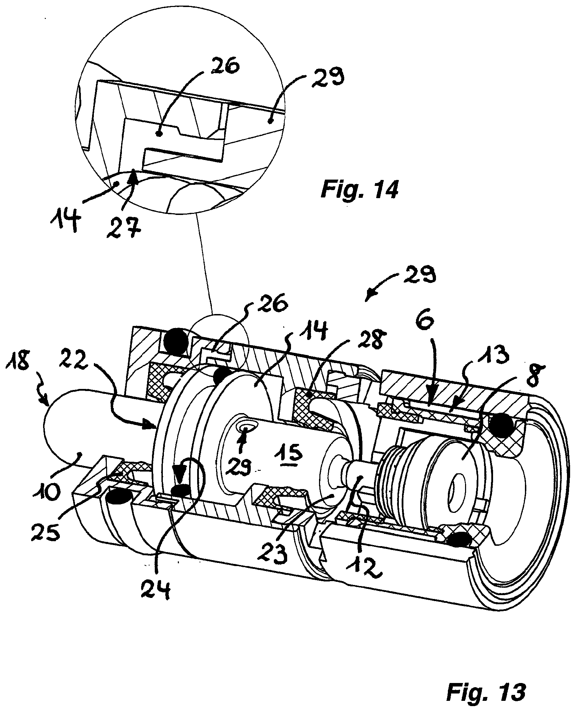

Wie aus einem Vergleich der Figuren 10 und 13 deutlich wird, bildet die dem Schieber-Endbereich 18 zugewandte Ringfläche des Ringflansches 14 die größere Teilfläche 22, während die dem Schieber-Endbereich 18 abgewandte Stirnfläche des Sperrschiebers 10 die demgegenüber kleinere Teilfläche 23 darstellt.

Damit das zuströmende Wasser auf die Ringfläche am Ringflansch 14 einwirken kann, ist der zwischen dem Ringflansch 14 und der benachbarten Stirninnenseite der Einsetzkartusche 19 vorgesehene Kartuschen-Innenraum an den Berührungs- oder Kontaktflächen zwischen der Einsetzkartusche 19 und dem Sperrschieber 10 abgedichtet. Dazu ist zwischen dem Ringumfang des Ringflansches 14 und dem Kartuschen-Innenumfang der Einsetzkartusche 19 zumindest eine Ringdichtung 24 vorgesehen. Eine weitere, ebenfalls radial dichtende Ringdichtung 25 dichtet den über die Einsetzkartusche 19 vorstehenden Schieber-Endbereich 18 des Sperrschiebers 10 ab. Dabei ist der Kartuschen-Innenraum und der vom zuströmenden Wasser umspülte Außenumfang der Einsetzkartusche 19 über zumindest einen, durch die Kartuschen-Umfangswandung führenden Verbindungskanal 26 verbunden.

An dem dem Schieber-Endbereich 18 abgewandten und ebenfalls durchmesserreduzierten Teilbereich 15 des Sperrschiebers 10 liegt zumindest eine dritte Ringdichtung 28 radial dichtend an, so dass die Teilflächen 22, 23 hydraulisch voneinander getrennt sind. In Figur 10 ist erkennbar, dass der zwischen der als Teilfläche 23 dienenden Stirnfläche des Sperrschiebers 10 und dessen Ringfläche vorgesehene Kartuschen-Innenraum über zumindest einen Belüftungskanal 29 mit der Atmosphäre verbunden ist. Während die im Kartuschen-Innenraum mündende Kanalöffnung des Belüftungskanals 29 umfangsseitig im Teilbereich 15 des Sperrschiebers 10 vorgesehen ist, ist die der Atmosphäre zugewandte Kanalöffnung des den Sperrschieber 10 durchsetzenden Belüftungskanals 29 am Schieber-Endbereich 18 angeordnet. Bei der in Figur 10 bis 15 gezeigten Ausführung bewegt sich der Sperrschieber 10 durch Schließen des in die Handbrause integrierten Brause- oder Entnahmeventils am Betätigungselement 21 von der Entriegelungsstellung in die Verriegelungsstellung. Nach Schließen des Brause- oder Entnahmeventils herrscht in der Wasserleitung überall derselbe Druck. Durch die im Verhältnis zur Teilfläche 23 größere Teilfläche 22 am Ringflansch 14 entsteht eine Kraft, welche den Sperrschieber 10 von seiner Entriegelungsstellung in Figur 11 in seine in Figur 12 gezeigte Verriegelungsstellung bewegt. Wird die Handbrause 2 demgegenüber zu gegebener Zeit wieder aus der Handbrause-Aufnahme 5 entnommen, wird eine Rückstellbewegung des Sperrschiebers 10 von der Verriegelungsstellung in die Entriegelungsstellung freigegeben. Wird nun anschließend das in die Handbrause 2 integrierte Brause- oder Entnahmeventil am Betätigungselement 21 geöffnet, drückt das auf den Ventilkörper 8 einwirkende Wasser auch den am Führungszapfen 12 anliegenden Sperrschieber 10 zurück in seine Entriegelungsstellung.

Der Sperrschieber 10 und der vom Sperrschieber 10 beaufschlagte Ventilkörper 8 bewegen sich nur, wenn der Wasserdurchfluß am Betätigungselement 21 freigegeben wird. Durch Öffnen des in die Handbrause 2 integrierten Brause- oder Entnahmeventils am Betätigungselement 21 bewegt sich der Sperrschieber 10 in seine Entriegelungsstellung. Durch Schließen des Brause- oder Entnahmeventils kann sich der Sperrschieber wieder zurück in seine Verriegelungsstellung bewegen. Bei geschlossenem Brause- oder Entnahmeventil verharrt der Sperrschieber 10 in seiner Verriegelungsstellung, in welcher Verriegelungsstellung der Sperrschieber 10 das Einsetzen und Ablegen der Handbrause 2 in die Handbrause-Aufnahme 4 nicht behindert und aus der Handbrause-Aufnahme 4 zumindest weitestgehend zurückgezogen ist.

Die hier dargestellten Ausführungen der Auslaufarmatur 1 zeichnen sich durch eine hohe Betriebssicherheit im Hinblick auf eventuelle Undichtigkeiten im Bereich der zur Handbrause 2 führenden Schlauchleitung 3 aus.

### Bezugszeichenliste

- 1: Auslaufarmatur
- 2: Handbrause
- 3: Schlauchleitung
- 4: Armaturenkorpus
- 5: Handbrause-Aufnahme
- 6: (erstes) Absperrventil
- 8: Ventilkörper (des ersten Absperrventils 6)
- 10: Sperrschieber
- 11: Rückstellfeder
- 12: Führungszapfen
- 13: Ventilgehäuse (des ersten Absperrventils 6)
- 14: Ringflansch (am Sperrschieber 10)
- 15: Durchmesserreduzierter Teilbereich (des Ventilkörpers 9)
- 16: Ringöffnung
- 17: Dichtring
- 18: Schieber-Endbereich (des Sperrschiebers 10)
- 19: Einsetzkartusche
- 20: Zulaufventil
- 21: Betätigungshebel
- 22: Teilfläche (größere Teilfläche am Ringflansch 14)
- 23: Teilfläche (kleinere Teilfläche stirnseitig am Sperrschieber 10)
- 24: Ringdichtung (umfangsseitig am Ringflansch 14)
- 25: Ringdichtung (am Sperrschieber-Endbereich 18)
- 26: Verbindungskanal
- 27: Kanalöffnung (zum Kartuschen-Innenraum in der Kartuschen-Umfangswandung)
- 28: Ringdichtung (am Teilbereich 15 des Sperrschiebers 10)
- 29: Belüftungskanal (im Sperrschieber 10)

## Patentansprüche

1. Sanitäre Auslaufarmatur (1) mit einer Handbrause (2), die (2) ein Brause- oder Entnahmeventil hat und die über eine flexible Schlauchleitung (3) mit einem Armaturenkorpus (4) verbunden ist, der (4) eine Handbrause-Aufnahme (5) hat, in welcher Handbrause-Aufnahme (5) die Handbrause (2) in einer Bereitschaftsstellung einsetzbar und ablegbar ist, wobei im Armaturenkorpus (4) zumindest ein, in einem zur Schlauchleitung (3) führenden Leitungsabschnitt zwischengeschaltetes Absperrventil (6) vorgesehen ist, dessen Ventilkörper (8) zwischen einer Offenstellung und einer den Wasserzulauf zur Schlauchleitung (3) absperrenden Schließstellung bewegbar geführt ist, dass im Armaturenkorpus (4) ein Sperrschieber (10) zwischen einer Entriegelungsstellung und einer Verriegelungsstellung verschiebbar ist, in welcher Verriegelungsstellung der Sperrschieber (10) den Stellweg des Ventilkörpers (8) aus der Schließstellung sperrt, wobei der Sperrschieber (10) mit einem freien Sperrschieber-Endbereich (18) derart in die Handbrause-Aufnahme (4) vorsteht, dass die in der Bereitschaftsstellung in die Handbrause-Aufnahme (4) eingesetzte und abgelegte Handbrause (2) den freien Sperrschieber-Endbereich (18) beaufschlagt und den Sperrschieber (10) in seiner Verriegelungsstellung sichert, **dadurch gekennzeichnet, dass** am Sperrschieber (10) zumindest zwei, vom zuströmenden Wasser beaufschlagbare und in endgegengesetzte Richtungen orientierte Teilflächen (22, 23) vorgesehen sind, von denen die dem Schieber-Endbereich (18) zugewandte(n) Teilfläche(n) (22) im Vergleich zu der/den dem Schieber-Endbereich (18) abgewandte(n) Teilfläche(n) (23)größer ist/sind,
sodass nach Schließen des Brause- oder Entnahmeventils in der Wasserleitung überall derselbe Druck herrscht, der den Sperrschieber (10) von seiner Entriegelungsstellung in seine Verriegelungsstellung bewegt, und, sobald das Brause- oder Entnahmeventil geöffnet wird, das auf den Ventilkörper (8) einwirkende Wasser den Sperrschieber (10) zurück in seine Entriegelungsstellung drückt.

2. Auslaufarmatur nach Anspruch 1, **dadurch gekennzeichnet, dass** das zumindest eine Absperrventil (6) oder zumindest eines der Absperrventile (6) als Rückschlagventil ausgebildet ist.

3. Auslaufarmatur nach Anspruch 1 oder 2, **dadurch gekennzeichnet, dass** am Ventilkörper (8) des zumindest einen Absperrventils (6) oder zumindest eines der Absperrventile (6) ein vorzugsweise zentraler Führungszapfen (12) vorgesehen ist, der in einem Ventilgehäuse (13) des Absperrventils (6) verschieblich geführt ist.

4. Auslaufarmatur nach Anspruch 3, **dadurch gekennzeichnet, dass** der Führungszapfen (12) abströmseitig derart über das Ventilgehäuse (13) vorsteht, dass der Schiebeweg des mit dem Führungszapfen (12) verbundenen Ventilkörpers (8) mittels dem Sperrschieber (10) sperrbar ist.

5. Auslaufarmatur nach einem der Ansprüche 3 oder 4, **dadurch gekennzeichnet, dass** der Sperrschieber (10) in seiner Verriegelungsstellung den Führungszapfen (12) des als Rückschlagventil ausgestalteten Absperrventils (6) beaufschlagt.

6. Auslaufarmatur nach einem der Ansprüche 1 bis 5, **dadurch gekennzeichnet, dass** das Absperrventil (6) in einer vorzugsweise zylindrischen Einsetzkartusche (19) gehalten ist, die in den Armaturenkorpus (4) einsetzbar ist, und dass der freie Schieber-Endbereich (18) des Sperrschiebers (10) stirnseitig über die Einsetzkartusehe (19) vorsteht.

7. Auslaufarmatur nach einem der Ansprüche 1 bis 6, **dadurch gekennzeichnet, dass** der Sperrschieber von der Verriegelungsstellung gegen eine Rückstellkraft in die Entriegelungsstellung verschiebbar ist.

8. Auslaufarmatur nach Anspruch 7, **dadurch gekennzeichnet, dass** als Rückstellkraft zumindest ein gummielastisches oder federelastisches Rückstellelement vorgesehen ist.

9. Auslaufarmatur nach Anspruch 8, **dadurch gekennzeichnet, dass** als Rückstellkraft eine Druck- oder Wendelfeder (11) vorgesehen ist.

10. Auslaufarmatur nach Anspruch 9, **dadurch gekennzeichnet, dass** durch Öffnen des Brause- oder Entnahmeventils der Sperrschieber (10) sich in seine Entriegelungsstellung bewegt, und dass durch Schließen des Brause- oder Entnahmeventils der Sperrschieber (10) sich in seine Verriegelungsstellung bewegt.

11. Auslaufarmatur nach Anspruch 9 oder 10, **dadurch gekennzeichnet, dass** der Sperrschieber (10) bei geschlossenem Brause- oder Entnahmeventil in seiner Verriegelungsstellung verharrt, in welcher Verriegelungsstellung der Sperrschieber (10) das Einsetzen und Ablegen der Handbrause (2) in die Handbrause-Aufnahme (4) nicht behindert und aus der Handbrause-Aufnahme (4) zumindest weitgehend zurückgezogen ist.

12. Auslaufarmatur nach einem der Ansprüche 9 bis 11, **dadurch gekennzeichnet, dass** eine dem Schieber-Endbereich (18) zugewandte Ringfläche eines Ringflansches (14) vom zuströmenden Wasser beaufschlagbar ist.

13. Auslaufarmatur nach einem der Ansprüche 9 bis 12, **dadurch: gekennzeichnet, dass** der zwischen dem Ringflansch (14) und der benachbarten Stirninnenseite der Einsetzkartusche (19) vorgesehene Kartuschen-Innenraum an den Berührungs- oder Kontaktflächen zwischen der Einsetzkartusche (19) und dem Sperrschieber (10) abgedichtet ist.

14. Auslaufarmatur nach einem der Ansprüche 9 bis 13, wenn vom Anspruch 6 abhängig, **dadurch gekennzeichnet**, der Kartuschen-Innenraum und die vom zuströmenden Wasser umspülte Außenseite der Einsetzkartusche über zumindest einen Verbindungskanal (26) verbunden ist.

15. Auslaufarmatur nach einem der Ansprüche 9 bis 14, **dadurch gekennzeichnet, dass** die dem Schieber-Endbereich (18) abgewandte Stirnfläche des Sperrschiebers (10) von dem zuströmenden Wasser beaufschlagbar ist.

16. Auslaufarmatur nach einem der Ansprüche 9 bis 15, wenn vom Anspruch 6 abhängig, **dadurch gekennzeichnet, dass** der zwischen der Stirnflä-j che des Sperrschiebers (10) und dessen Ringfläche vorgesehene Kartuschen-Innenraum über zumindest einen Belüftungskanal (29) mit der Atmosphäre verbunden ist.

17. Auslaufarmatur nach Anspruch 16, **dadurch gekennzeichnet, dass** der zumindest eine Belüftungskanal (29) im Sperrschieber (10) vorgesehen ist und dass der Belüftungskanal (29) vorzugsweise im Schieber-Endbereich (18) seine der Atmosphäre zugewandte Kanalöffnung hat.

18. Sanitäre Einsetzkartusche mit einem Absperrventil (6), das ein Ventilgehäuse hat, in dem ein Ventilkörper (8) zwischen einer Offenstellung und einer Schließstellung bewegbar: geführt ist, wobei in der Einsetzkartusche ein Sperrschieber (10) zwischen einer Entriegelungsstellung und einer Verriegelungsstellung verschiebbar ist, in welcher Verriegelungsstellung der Sperrschieber (10) den Stellweg des Ventilkörpers (8) aus der Schließstellung sperrt, wobei der Sperrschieber (10) mit einem freien Sperrschieber-Endbereich (18) über die Einsetzkartusche (19) stirnseitig vorsteht, **dadurch gekennzeichnet, dass** am Sperrschieber (10) zumindest zwei, vom zuströmenden Wasser beaufschlagbare und in entgegengesetzte Richtungen orientierte Teilflächen (22, 23) vorgesehen sind, von denen die dem Schieber-Endbereich (18) zugewandte(n) Teilfläche(n) (22) im Vergleich zu der/den dem Schieber-Endbereich (18) abgewandte (n) Teilfläche (n) (23) größer ist.

## Claims

1. Sanitary outlet fitting (1) having a handheld shower attachment (2) which (2) has a shower attachment or extraction valve and is connected via a flexible hose line (3) to a fitting structure (4) which (4) has a handheld shower attachment holder (5), in which handheld shower attachment holder (5) the handheld shower attachment (2) can be inserted and deposited in a standby position, wherein, in the fitting structure (4), there is provided at least one shut-off valve (6) which is interposed in a line section leading to the hose line (3) and the valve body (8) of which is guided so as to be movable between an open position and a closed position in which it shuts off the water supply to the hose line (3), in that, in the fitting structure (4), a blocking slide (10) is displaceable between an unlocking position and a locking position, in which locking position the blocking slide (10) blocks the adjustment travel of the valve body (8) out of the closed position, and wherein the blocking slide (10) protrudes by way of a free blocking slide end region (18) into the handheld shower attachment holder (4) such that the handheld shower attachment (2) inserted into and deposited in the handheld shower attachment holder (4) in the standby position acts on the free blocking slide end region (18) and secures the blocking slide (10) in its locking position, **characterized in that**, on the blocking slide (10), at least two surface parts (22, 23) are provided which can be acted on by the inflowing water and which are oriented in opposite directions and of which that/those surface part(s) (22) which face(s) toward the slide end region (18) is/are larger than that/those surface part(s) (23) which face(s) away from the slide end region (18), such that, after closing of the shower attachment or extraction valve, the same pressure prevails throughout the water line, which pressure moves the blocking slide (10) from its unlocking position into its locking position, and, as soon as the shower attachment or extraction valve is opened, the water acting on the valve body (8) pushes the blocking slide (10) back into its unlocking position.

2. Outlet fitting according to Claim 1, **characterized in that** the at least one shut-off valve (6) or at least one of the shut-off valves (6) is in the form of a check valve.

3. Outlet fitting according to Claim 1 or 2, **characterized in that** a preferably central guide peg (12) is provided on the valve body (8) of the at least one shut-off valve (6) or at least one of the shut-off valves (6), which guide peg is guided displaceably in a valve housing (13) of the shut-off valve (6).

4. Outlet fitting according to Claim 3, **characterized in that** the guide peg (12) projects beyond the valve housing (13) at the downstream side such that the sliding travel of the valve body (8) connected to the guide peg (12) can be blocked by means of the blocking slide (10).

5. Outlet fitting according to one of Claims 3 or 4, **characterized in that** the blocking slide (10), in its locking position, acts on the guide peg (12) of the shut-off valve (6) designed as a check valve.

6. Outlet fitting according to one of Claims 1 to 5, **characterized in that** the shut-off valve (6) is held in a preferably cylindrical insert cartridge (19) which is insertable into the fitting structure (4), and **in that** the free slide end region (18) of the blocking slide (10) protrudes beyond the insert cartridge (19) at the face side.

7. Outlet fitting according to one of Claims 1 to 6, **characterized in that** the blocking slide is displaceable from the locking position into the unlocking position counter to a restoring force.

8. Outlet fitting according to Claim 7, **characterized in that**, for the restoring force, at least one rubber-elastic or resiliently elastic restoring element is provided.

9. Outlet fitting according to Claim 8, **characterized in that**, for the restoring force, a compression spring or helical spring (11) is provided.

10. Outlet fitting according to Claim 9, **characterized in that** opening of the shower attachment or extraction valve causes the blocking slide (10) to move into its unlocking position, and **in that** closure of the shower attachment or extraction valve causes the blocking slide (10) to move into its locking position.

11. Outlet fitting according to Claim 9 or 10, **characterized in that**, when the shower attachment or extraction valve is closed, the blocking slide (10) remains in its locking position, in which locking position the blocking slide (10) does not impede the insertion and depositing of the handheld shower attachment (2) into the handheld shower attachment holder (4) and is at least substantially retracted out of the handheld shower attachment holder (4).

12. Outlet fitting according to one of Claims 9 to 11, **characterized in that** an annular surface of an annular flange (14) which faces toward the slide end region (18) can be acted on by the inflowing water.

13. Outlet fitting according to one of Claims 9 to 12, **characterized in that** the cartridge interior space provided between the annular flange (14) and the adjacent inner face side of the insert cartridge (19) is sealed off at the touching or contact surfaces between the insert cartridge (19) and the blocking slide (10).

14. Outlet fitting according to one of Claims 9 to 13, if dependent on Claim 6, **characterized in that** the cartridge interior space and the outer side, around which the inflowing water passes, of the insert cartridge are connected by means of at least one connecting duct (26).

15. Outlet fitting according to one of Claims 9 to 14, **characterized in that** that face surface of the blocking slide (10) which faces away from the slide end region (18) can be acted on by the inflowing water.

16. Outlet fitting according to one of Claims 9 to 15, if dependent on Claim 6, **characterized in that** the cartridge interior space provided between the face surface of the blocking slide (10) and the annular surface thereof is connected to the atmosphere via at least one aeration duct (29).

17. Outlet fitting according to Claim 16, **characterized in that** the at least one aeration duct (29) is provided in the blocking slide (10) and **in that** the aeration duct (29) has its duct opening facing toward the atmosphere preferably in the slide end region (18).

18. Sanitary insert cartridge having a shut-off valve (6) which has a valve housing in which a valve body (8) is guided so as to be movable between an open position and a closed position, wherein, in the insert cartridge, a blocking slide (10) is displaceable between an unlocking position and a locking position, in which locking position the blocking slide (10) blocks the adjustment travel of the valve body (8) out of the closed position, and wherein the blocking slide (10) protrudes by way of a free blocking slide end region (18) beyond the insert cartridge (19) at the face side, **characterized in that**, on the blocking slide (10), at least two surface parts (22, 23) are provided which can be acted on by the inflowing water and which are oriented in opposite directions and of which that/those surface part(s) (22) which face(s) toward the slide end region (18) is/are larger than that/those surface part(s) (23) which face(s) away from the slide end region (18).

## Revendications

1. Robinet sanitaire (1) avec une pomme de douche (2), qui (2) comporte une soupape de douche ou de prélèvement et qui est raccordée par un tuyau flexible (3) à un corps de robinet (4), qui (4) présente un logement de pomme de douche (5), logement de pomme de douche (5) dans lequel la pomme de douche (2) peut être insérée et déposée dans une position d'attente, dans lequel il est prévu dans le corps de robinet (4) au moins une soupape d'arrêt (6) intercalée dans une partie de conduite menant au tuyau flexible (3), dont le corps de soupape (8) est guidé de façon déplaçable entre une position d'ouverture et une position de fermeture coupant l'arrivée d'eau vers le tuyau flexible (3), dans lequel une vanne d'arrêt (10) peut coulisser dans le corps de robinet (4) entre une position de déverrouillage et une position de verrouillage, position de verrouillage dans laquelle la vanne d'arrêt (10) bloque la course de réglage du corps de soupape (8) à partir de la position de fermeture, dans lequel la vanne d'arrêt (10) est saillante avec une zone d'extrémité libre de vanne d'arrêt (18) dans le logement de pomme de douche (4), de telle manière que la pomme de douche (2) insérée et déposée en position d'attente dans le logement de pomme de douche (4) s'applique sur la zone d'extrémité libre (18) de la vanne d'arrêt et cale la vanne d'arrêt (10) dans sa position de verrouillage, **caractérisé en ce qu'**il est prévu sur la vanne d'arrêt (10) au moins deux faces partielles (22, 23) pouvant être atteintes par l'eau qui arrive et orientées dans des directions opposées, parmi lesquelles la/les face(s) partielle(s) (22) tournée(s) vers la zone d'extrémité libre (18) de la vanne d'arrêt est/sont plus grande(s) par rapport à la/aux face(s) partielle(s) (23) détournée(s) de l'extrémité libre (18) de la vanne d'arrêt, de telle manière qu'après la fermeture de la soupape de douche ou de prélèvement il règne dans la conduite d'eau partout la même pression, qui déplace la vanne d'arrêt (10) de sa position de déverrouillage à sa position de verrouillage et que, dès que l'on ouvre la soupape de douche ou de prélèvement, l'eau agissant sur le corps de soupape (8) repousse la vanne d'arrêt (10) dans sa position de déverrouillage.

2. Robinet selon la revendication 1, **caractérisé en ce que** ladite au moins une soupape d'arrêt (6) ou au moins une des soupapes d'arrêt (6) est constituée par une soupape anti-retour.

3. Robinet selon la revendication 1 ou 2, **caractérisé en ce qu'**il est prévu sur le corps de soupape (8) de ladite au moins une soupape d'arrêt (6) ou d'au moins une des soupapes d'arrêt (6) un tourillon de guidage de préférence central (12), qui est guidé de façon coulissante dans un boîtier de soupape (13) de la soupape d'arrêt (6).

4. Robinet selon la revendication 3, **caractérisé en ce que** le tourillon de guidage (12) est saillant vers l'aval au-delà du boîtier de soupape (13), de telle manière que la course de glissement du corps de soupape (8) relié au tourillon de guidage (12) puisse être bloquée au moyen de la vanne d'arrêt (10).

5. Robinet selon l'une des revendications 3 à 4, **caractérisé en ce que** la vanne d'arrêt (10) touche dans sa position de verrouillage le tourillon de guidage (12) de la soupape d'arrêt (6) constituée par une vanne anti-retour.

6. Robinet selon l'une quelconque des revendications 1 à 5, **caractérisé en ce que** la soupape d'arrêt (6) est maintenue dans une cartouche d'insertion de préférence cylindrique (19), qui peut être insérée dans le corps de robinet (4) et **en ce que** la zone d'extrémité libre de vanne (18) de la vanne d'arrêt (10) est saillante frontalement au-delà de la cartouche d'insertion (19).

7. Robinet selon l'une quelconque des revendications 1 à 6, **caractérisé en ce que** la vanne d'arrêt peut glisser de la position de verrouillage à la position de déverrouillage contre une force de rappel.

8. Robinet selon la revendication 7, **caractérisé en ce qu'**il est prévu comme force de rappel au moins un élément de rappel élastique en caoutchouc ou à ressort.

9. Robinet selon la revendication 8, **caractérisé en ce qu'**il est prévu comme force de rappel un ressort de pression ou hélicoïdal (11).

10. Robinet selon la revendication 9, **caractérisé en ce que** la vanne d'arrêt (10) se déplace dans sa position de déverrouillage par l'ouverture de la soupape de douche ou de prélèvement et **en ce que** la vanne d'arrêt (10) se déplace dans sa position de verrouillage par la fermeture de la soupape de douche ou de prélèvement.

11. Robinet selon la revendication 9 ou 10, **caractérisé en ce que** la vanne d'arrêt (10) demeure dans sa position de verrouillage lorsque la soupape de douche ou de prélèvement est fermée, position de verrouillage dans laquelle la vanne d'arrêt (10) n'empêche pas l'insertion et le dépôt de la pomme de douche (2) dans le logement de pomme de douche (4) et est au moins largement sortie du logement de pomme de douche (4).

12. Robinet selon l'une quelconque des revendications 9 à 11, **caractérisé en ce qu'**une face annulaire d'une bride annulaire (14) tournée vers la zone d'extrémité de vanne (18) peut être atteinte par l'eau qui arrive.

13. Robinet selon l'une quelconque des revendications 9 à 12, **caractérisé en ce que** l'espace intérieur de cartouche prévu entre la bride annulaire (14) et le côté frontal intérieur voisin de la cartouche d'insertion (19) est rendu étanche aux faces d'application ou de contact entre la cartouche d'insertion (19) et la vanne d'arrêt (10).

14. Robinet selon l'une quelconque des revendications 9 à 13, lorsqu'elle dépend de la revendication 6, **caractérisé en ce que** l'espace intérieur de cartouche et le côté extérieur de la cartouche d'insertion balayé par l'eau qui arrive sont raccordés par au moins un canal de raccordement (26).

15. Robinet selon l'une quelconque des revendications 9 à 14, **caractérisé en ce que** la face frontale de la vanne d'arrêt (10) détournée de la zone d'extrémité de vanne (18) peut être atteinte par l'eau qui arrive.

16. Robinet selon l'une quelconque des revendications 9 à 15, lorsqu'elle dépend de la revendication 6, **caractérisé en ce que** l'espace intérieur de cartouche prévu entre la face frontale de la vanne d'arrêt (10) et sa face annulaire est relié à l'atmosphère par au moins un canal d'aération (29).

17. Robinet selon la revendication 16, **caractérisé en ce que** ledit au moins un canal d'aération (29) est prévu dans la vanne d'arrêt (10) et **en ce que** le canal d'aération (29) a son ouverture de canal tournée vers l'atmosphère de préférence dans la zone d'extrémité de vanne (18).

18. Cartouche d'insertion sanitaire avec une soupape d'arrêt (6), qui comprend un boîtier de soupape, dans lequel un corps de soupape (8) est guidé de façon déplaçable entre une position d'ouverture et une position de fermeture, dans laquelle une vanne d'arrêt (10) peut coulisser dans la cartouche d'insertion entre une position de déverrouillage et une position de verrouillage, position de verrouillage dans laquelle la vanne d'arrêt (10) bloque la course de réglage du corps de soupape (8) à partir de la position de fermeture, dans laquelle la vanne d'arrêt (10) est saillante frontalement au-delà de la cartouche d'insertion (19) avec une zone d'extrémité libre de vanne d'arrêt (18), **caractérisée en ce qu'**il est prévu sur la vanne d'arrêt (10) au moins deux faces partielles (22, 23) pouvant être atteintes par l'eau qui arrive et orientées dans des directions opposées, parmi lesquelles la/les face(s) partielle(s) (22) tournée(s) vers la zone d'extrémité de vanne d'arrêt (18) est/sont plus grande(s) par rapport à la/aux face(s) partielle(s) (23) détournée(s) de l'extrémité de vanne d'arrêt (18).
